# DEMANDE DE BREVET EUROPEEN

(11) **EP 1 213 544 A1**
(43) Date de publication de la demande: **12.06.2002**
(21) Numéro de dépôt: 01402870.8
(22) Date de dépôt: 08.11.2001
(51) Int. Cl.: F24D 13/02

(54) **Panneau composite de construction du type intégrant des moyens de chauffage électrique rayonnants**

(30) Priorité: 05.12.2000 FR 0015733
(71) Demandeur: Acome Société Cooperative De Travailleurs, 75008 Paris (FR)
(72) Inventeur: Le Noane, Georges, 50600 Virey (FR); Brault, Dominique, 50140 Mortain (FR); Fillatre, Daniel, 50140 Romagny (FR); Aumoitte, Christian, 50540 La Mancelliere (FR)
(74) Mandataire: Gorrée, Jean-Michel

(57) **Abrégé**

Panneau composite de construction du type intégrant des moyens de chauffage rayonnants,
caractérisé en ce qu'il comporte : au moins un panneau frontal (2) ; au moins un ensemble (9) de câbles électriques chauffants (6) de type autorégulant présentant un méplat longitudinal et de relativement courte longueur reliés entre eux par un conducteur électrique d'alimentation (7), ces câbles étant étroitement appliqués contre la face intérieure dudit panneau frontal (2) en s'étendant approximativement selon la longueur de celui-ci, et au moins un panneau arrière isolant (12).

## Description

La présente invention concerne des perfectionnements apportés aux panneaux composites de construction du type intégrant des moyens de chauffage électrique rayonnants, de tels panneaux étant destinés à une fabrication intégrant un système de chauffage particulièrement économique de plafonds ou de murs et étant adaptées aux modes de constructions par techniques rapportées dans des bâtiments neufs ou en rénovation.

On connaît de nombreuses techniques de chauffage électrique adaptées au chauffage par le sol, le plafond ou les murs, et en particulier toutes les techniques faisant appel à des nappes de câbles dits "à puissance constante" du type monoconducteur ou du type biconducteur. Ces derniers ont l'avantage de se connecter par une seule extrémité, sans retour encombrant entre la grille et la connexion. De plus, de façon avantageuse par rapport au câble monoconducteur, le câble biconducteur peut s'arrêter n'importe où dans la pièce, permettant ainsi une installation plus simple et plus rapide, sans entretien, et il ne génère pas de champ électromagnétique, satisfaisant en cela aux normes européennes. On connaît aussi des systèmes basés sur des films chauffants, fonctionnant aussi à puissance constante, qui peuvent être incorporés dans des plaques de faibles dimensions ou être préalablement étalés in situ pour recevoir ensuite une plaque de finition.

Cependant, les installations réalisées grâce à ces câbles à puissance constante ou à ces films à puissance constante présentent de multiples inconvénients, et en particulier celui, pour les câbles, de nécessiter la fabrication de nappes qui coûtent relativement cher et dont la mise en oeuvre doit répondre à des règles de calcul préalable sous peine d'aboutir à un fonctionnement défectueux et celui, pour toutes les installations à puissance constante, de mal supporter la présence d'un obstacle thermique pouvant engendrer le phénomène de "blocage thermique". De plus dans le cadre des systèmes de construction basés sur des plaques composites de carton et de plâtre, systèmes qui tendent à se généraliser dans la construction de logements neufs ou en rénovation, ces installations à puissance constante posent le problème fondamental d'une possible limitation de température soit sous l'effet d'un blocage thermique, soit sous l'effet d'une mauvaise prédétermination entraînant une densité de puissance trop importante. Il est en effet raisonnable de penser que des températures trop élevées même localement sont susceptibles de générer des désordres sur ce type de plaques, soit pour la plaque elle-même, soit pour le revêtement de finition appliqué en fin de construction.

De ce point de vue, les câbles dits "autorégulants", c'est-à-dire possédant une caractéristique d'autorégulation de puissance en fonction de l'écart thermique entre le câble et son milieu extérieur, présentent l'avantage d'éviter cet effet de blocage thermique. De plus, réagissant aux variations thermiques du milieu extérieur, par exemple celles induites par l'apparition d'un rayon de soleil sur la surface à chauffer ou par l'ouverture d'une porte ou d'une fenêtre, ils se comportent comme des câbles "intelligents" susceptibles de moduler, sur une surface considérée, leur puissance.

Ils présentent cependant quelques inconvénients majeurs lorsqu'ils sont purement et simplement utilisés comme des câbles à puissance constante, et notamment lors de la phase de mise en fonctionnement où ils nécessitent une forte intensité de courant d'appel qui, pour une installation complète dans un pavillon, peut être difficile à gérer. De plus, dans l'état de l'art connu, ce type de câble se présente sous forme soit de câble rond, forme qui n'est pas très adaptée à une bonne diffusion thermique sur un support plan, soit sous forme plate et dans ce cas le positionnement du câble sur la tranche ne convient pas non plus à une bonne diffusion thermique. Dans ce cadre, le document FR-A-2 792 491 au nom de la Demanderesse décrit un système dit "d'arêtes autorégulantes" qui a pour caractéristique essentielle d'utiliser des câbles autorégulants de courtes longueurs placés, par exemple en parallèle, sur la surface à chauffer ; ces câbles de courtes longueurs sont simplement posés à plat, ce qui leur confère la meilleure capacité d'échange thermique. Ces câbles sont par ailleurs conçus relativement larges et de ce fait nécessitent un moindre courant d'appel, ce qui élimine l'inconvénient des câbles commercialisés pour les applications habituelles requérant une autorégulation de puissance de chauffage.

Si ce système simple permet de réaliser sans problème, et avec tous les avantages décrits dans le document susmentionné, des sols "intelligents" que ce soit en couche épaisse avec une chape et donc une assez forte inertie ou que ce soit en couche mince par mise en oeuvre d'une dalle mince liquide ou par simple application sur la base isolée du sol, il ne permet cependant pas de réaliser dans les meilleures conditions économiques et d'efficacité thermique des plafonds ou des murs, notamment dans le cas d'utilisation des techniques à plaques rapportées tendant à se généraliser dans le bâtiment tant en construction neuve qu'en rénovation. De même, les films à puissance constante, outre les inconvénients susmentionnés, ne garantissent en rien la réalisation de plafonds ou de murs de façon très simple et très économique et surtout posent un problème de garantie d'efficacité thermique dont seule une parfaite adhérence, qui de plus doit être durable dans le temps, peut conduire à une solution satisfaisante.

L'invention a pour but de remédier aux multiples inconvénients de ces systèmes connus faisant appel à des nappes de câbles ou à des films, ou à des arêtes autorégulantes non adaptés à une installation simple en plafond, et de proposer une solution fiable, économique, facile à installer et alliant les qualités de l'arête autorégulante avec l'assurance d'un rendement thermique bon et durable dans le temps.

A ces fins, l'invention propose un panneau composite de construction du type intégrant des moyens de chauffage rayonnants, caractérisé en ce que, étant agencé conformément à l'invention, il comporte
- au moins un panneau frontal,
- au moins un ensemble de câbles électriques chauffants de type autorégulant présentant un méplat longitudinal et de relativement courte longueur reliés entre eux par un conducteur électrique d'alimentation, ces câbles étant étroitement appliqués contre la face intérieure dudit panneau frontal en s'étendant approximativement selon la longueur de celui-ci, et
- au moins un panneau arrière isolant.

De préférence, le panneau de construction conforme à l'invention comporte en outre une couche d'une matière thermiquement bonne conductrice interposée entre chaque câble et la face intérieure du panneau frontal, et très avantageusement, de façon simple à mettre en oeuvre et peu onéreuse, ce sont des bandes métalliques en un métal thermiquement bon conducteur, notamment en aluminium, qui sont interposées entre les câbles respectifs et la face intérieure du panneau frontal.

Dans un mode de réalisation courant dans le domaine de la construction, le panneau frontal est un panneau en plâtre, ou bien est un panneau composite comprenant un panneau en plâtre revêtu frontalement d'une plaque d'habillage en carton ou analogue.

De façon préférée, le panneau arrière est constitué en un matériau au moins thermiquement et électriquement isolant de manière que la plus grande partie de la chaleur dégagée par chaque câble autorégulant soit évacuée vers l'avant et dissipée préférentiellement dans le local par rayonnement. En outre on peut profiter de la présence de ce panneau en matière thermiquement isolante et électriquement isolante (pour des raisons de sécurité) pour lui faire jouer également le rôle d'isolant phonique.

Pour éviter la constitution de poches d'air ou de canaux d'air qui perturberaient le bon fonctionnement thermique du panneau de l'invention, on prévoit avantageusement que l'espace libre entre le panneau frontal et le panneau arrière et entre les câbles soit rempli d'un matériau au moins électriquement et thermiquement isolant. En particulier on peut prévoir que le matériau isolant soit mis en place sous forme de bandes ; ou bien que le matériau isolant soit déposé sous forme liquide ou pâteuse sur le panneau frontal pour former, après prise, une masse isolante enrobant les câbles et tenant lieu de panneau arrière isolant ; ou bien encore que le panneau arrière en matière isolante soit creusé de gouttières qui sont conformées en correspondance avec la forme externe des câbles autorégulants et qui sont propres à recevoir lesdits câbles lorsque le panneau arrière est assemblé au panneau frontal, solution qui est préférée en pratique pour une fabrication industrielle.

De façon pratique, les câbles sont disposés approximativement parallèlement entre eux.

Dans un mode de réalisation concret, le panneau possède une forme sensiblement rectangulaire avec des dimensions sensiblement égales à celles des panneaux standards de construction normalisés de manière à être interchangeable avec ceux-ci, de sorte qu'un tel panneau de construction intégrant des moyens de chauffage peut être installé dans une cloison ou un plafond en lieu et place d'un panneau de construction standard. Par exemple un ou deux panneaux de construction intégrant des moyens de chauffage conformément à l'invention pourront être disposés en situation sensiblement centrale dans une cloison ou un plafond, le reste de la cloison ou du plafond étant constitué de panneaux standards.

Avantageusement, les câbles chauffants autorégulants sont répartis en plusieurs groupes mutuellement parallèles et implantés à distance les uns des autres, de sorte que, si besoin en est, le panneau peut être découpé en des emplacements prédéterminés en regard des intervalles séparant les groupes de câbles, ce qui peut faciliter l'implantation des panneaux de construction conformes à l'invention dans une paroi, cloison ou plafond, dont la longueur ou la largeur ne correspond pas à un multiple entier de la dimension des panneaux, et surtout si l'on veut moduler la capacité de chauffage plus finement qu'en adaptant un nombre entier de panneaux.

Le panneau composite de construction conforme à l'invention est remarquable en ceci qu'il est apte à remplacer, aux emplacements décidés par le concepteur du projet thermique, les panneaux standards habituellement utilisés pour la construction et d'autoriser une composition multifonctionnelle capable d'offrir des qualités rayonnantes "intelligentes" garantissant la qualité du plafond ou du mur rayonnant ; on obtient ainsi une garantie de température compatible avec les matériaux des panneaux rapportés et de leur finition et on évite les effets de "blocages" thermiques inhérents aux systèmes antérieurs à puissance constante.

Dans un panneau conforme à l'invention, on exploite ainsi toutes les qualités du système "d'arête autorégulante" objet du document FR 2 792 491 particulièrement bien adapté à la réalisation de sols à caractéristique de chauffage autorégulant dans le bâtiment ; notamment "l'intelligence" de la fonction de chauffage à autorégulation alliée à une forme de câble plat ou présentant un méplat facilitant l'échange thermique avec un étalement simple de l'arête autorégulante autorise la fabrication de panneaux de grandes dimensions. Le panneau composite de construction conforme à l'invention est donc également remarquable par le fait qu'il est possible de lui conserver les dimensions standards des panneaux standards disponibles dans le commerce pour ce type de construction tendant à se généraliser, tout en offrant aux installateurs une solution conforme aux principes d'installation des panneaux ou plaques rapportés.

Le panneau composite de construction conforme à l'invention permet donc une installation très simple et très économique dans la mesure où il constitue en fait un véritable système de plafond ou de mur rayonnant thermiquement ; ce qui signifie qu'en cas de réalisation d'un plafond ou d'un mur utilisant les panneaux conformes à l'invention, on établit, notamment à l'aide d'un logiciel très simple, un plan de "calepinage", comme pour d'autres systèmes de chauffage intégrés, comme par exemple des systèmes de sols hydrauliques, ce plan indiquant très simplement la meilleure topologie d'implantation des rails et des panneaux composites à chauffage autorégulé conformes à l'invention dans le but d'optimiser la proportion de surface rayonnante par rapport à la surface totale du plafond ou du mur considéré. De fait, l'homme de l'art va rechercher une optimisation des surfaces rayonnantes en fonction de la topologie de la pièce, ce qui peut conduire évidemment, au pourtour de la surface rayonnante globale ainsi réalisée par la juxtaposition des panneaux conformes à l'invention, à un nombre de découpes et donc de mauvaises chutes de panneaux standards non rayonnants thermiquement qui est légèrement supérieure à celles d'une installation normale. Ce léger surcoût est cependant extrêmement faible au regard des enjeux économiques qui concernent la réalisation de surfaces (murs, sols, plafonds) thermiquement rayonnantes et l'économie réalisée grâce aux qualités intrinsèques des panneaux composites conformes à l'invention est sans commune mesure avec ce très léger surcoût de découpes des panneaux de type classique. Enfin la simplicité de l'installation d'une surface rayonnante constituée de la juxtaposition de tels panneaux conformes à l'invention apparaît encore plus manifeste si l'on indique que le raccordement est simplement centralisé par rassemblement des fils d'alimentation des câbles du panneau par branchement de ces fils dans un bornier prévu à cet effet et par contrôle possible du bon fonctionnement de la surface chauffante ainsi réalisée avant la finition complète du plafond ou du mur qui, en fin de découpes et d'installation, a une apparence strictement identique à celle d'un plafond réalisé à l'aide de panneaux classiques non chauffants. Il est donc possible d'obtenir une finition tout à fait classique avec l'avantage de ne craindre, grâce aux qualités autorégulantes, ni problèmes de détérioration du panneau frontal, ni détérioration de la finition appliquée sur la plaque.

Le panneau composite de construction conforme à l'invention permet, de façon avantageuse, d'aboutir à un mode d'installation extrêmement simple et très économique dans la mesure, d'une part, où sa structure dimensionnelle correspond aux règles habituelles d'installation - c'est-à-dire une fixation sur des rails préalablement posés à une distance prédéterminée (par exemple réglementairement de 60 cm) -, d'autre part, où toutes les fonctions essentielles thermiques et acoustiques sont intégrées, l'efficacité étant donc garantie hors du champ lié à l'habilité et au savoir-faire d'un installateur et, d'autre part enfin, où le panneau s'installe selon la même méthode qu'un panneau traditionnel et permet donc d'équiper des plafonds sans être obligé de faire une réservation pénalisante de hauteur comme dans le cas de plaques, même de dimensions réduites, venant s'intercaler entre les rails. On notera aussi que le panneau, sur sa face réservée à la finition, est marqué, par une simple impression à l'encre par exemple, de l'emplacement de l'arête autorégulante, ce qui autorise ensuite de réaliser sans risque des perforations ou des installations complémentaires à travers ce panneau. Toutefois, même en cas de grosse erreur, le système d'arête autorégulante autorise qu'une des arêtes ou câbles présente un défaut (par exemple une coupure) sans que le fonctionnement de l'ensemble s'en trouve compromis.

Le panneau composite de construction conforme à l'invention permet ainsi de réaliser de multiples surfaces rayonnantes, telles que plafonds ou murs, tant en construction neuve qu'en rénovation, de façon très économique avec un système de pose entrant parfaitement dans le système conventionnel des plaques rapportées, avec une optimisation de la surface rayonnée et une garantie, de par sa construction, d'un très bon rendement thermique avec toutes les qualités d'un câble autorégulant spécialement conçu pour diffuser correctement et avec des courants d'appels d'intensité réduite, et ayant des qualités thermiques et acoustiques particulièrement intéressantes. La réalisation "composite" du panneau, tout en assurant à l'utilisateur un repérage de son système de câblage électrique, assure ainsi un degré de qualité nouveau et très adapté à la réalisation de surfaces thermiquement rayonnantes rapportées.

L'invention sera mieux comprise à la lecture détaillée qui suit de certains modes de réalisation donnés à titre d'exemples nullement limitatifs. Dans cette description, on se réfère aux dessins annexés sur lesquels :
- la figure 1 est une vue schématique partielle, en perspective et avec arrachement partiel, d'un panneau composite de construction conforme à l'invention,
- la figure 2 est une vue en coupe transversale d'une portion de plafond faisant intervenir plusieurs panneaux tel que celui de la figure 1 ; et
- les figures 3 et 4 sont des vues partielles en coupe (vue éclatée pour la figure 4) illustrant respectivement deux autres exemples de réalisation d'un panneau composite de construction agencé conformément à l'invention.

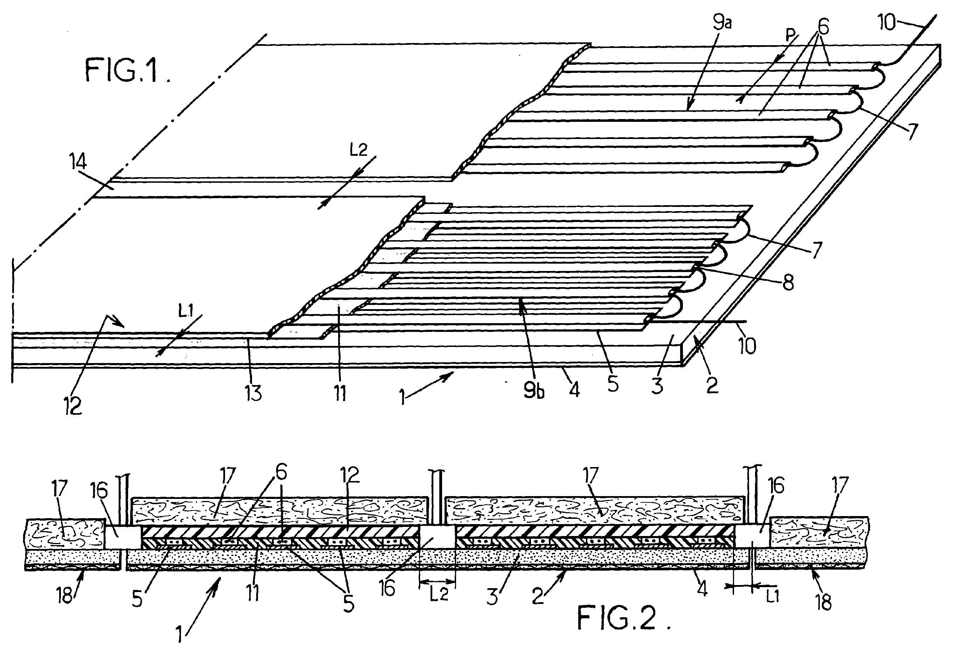

La figure 1 est une vue schématique partielle en perspective d'un panneau composite de construction, désigné dans son ensemble par la référence numérique 1, qui comporte un panneau frontal 2, qui peut être en plâtre ou en tout matériau analogue, ou aussi de façon préférentielle à structure composite alliant une ou plusieurs plaques notamment de plâtre 3 et une ou plusieurs plaques encollées en un matériau tel que du carton 4, disposées en sandwich (panneaux couramment disponibles dans le commerce, tels que ceux connus sous le nom de marque "placoplâtre"), permettant une finition par apport de peinture ou de tapisserie par exemple.

Au moins un ensemble ou groupe de câbles électriques chauffants 6 à caractéristique d'auto-régulation sont conformés pour présenter un méplat longitudinal afin de pouvoir être appliqués étroitement contre la face interne de la plaque de plâtre 2 avec une surface substantielle de contact avec la plaque de plâtre conduisant à une bonne conduction thermique du câble vers la plaque. Dans un mode de réalisation préféré auquel on a recours en pratique, les câbles 6 sont de forme aplatie, voire très aplatie, avec une section droite approximativement rectangulaire, comme visible sur la coupe transversale de la figure 2. Au surplus, les câbles 6 possèdent une relativement courte longueur comme exposé dans le document FR 2 792 494 et ils sont reliés entre eux par un conducteur électrique d'alimentation 7 raccordé à chaque câble par une épissure moulée 8.

L'ensemble constitue ce qui est appelé une "arête autorégulante" 9 dont l'alimentation électrique est réalisée par un câble 10 de raccordement avec un bornier.

Pour améliorer la qualité du contact thermique entre les câbles autorégulants 6 et la plaque frontale 2, il est souhaitable d'intercaler, entre chaque câble et la surface de la plaque 2, une couche 5 d'une matière thermiquement bonne conductrice. Cette couche 5 peut être en toute matière appropriée et peut avoir toute consistance. Toutefois, une solution à la fois économique et efficace consiste à constituer les couches 5 sous forme de bandes ou rubans métalliques minces en un métal thermiquement bon conducteur, tel que l'aluminium.

La fixation des câbles 6 sur la plaque frontale 2, avec interposition de bandes métalliques 5, doit être soignée afin de garantir un contact étroit des surfaces appliquées les unes contre les autres. Cette fixation pourra se faire par tout moyen propre à satisfaire cette exigence, par exemple par collage (avec conduction thermique), par agrafage, ....

Le panneau 1 est complété par au moins un panneau arrière 12, qui de préférence, est constitué en un matériau qui est isolant thermiquement afin d'empêcher une dispersion thermique vers l'arrière, qui est avantageusement isolant électriquement pour des raisons de sécurité, et qui de préférence est également isolant phoniquement pour participer à l'isolation phonique de la construction dans laquelle le panneau 1 est intégré.

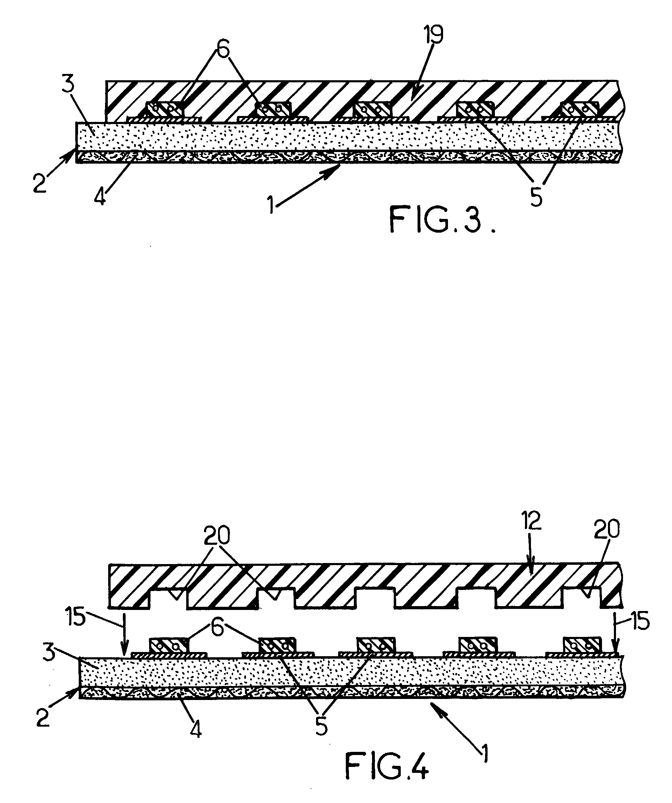

Pour obtenir un fonctionnement optimum du panneau chauffant, il est souhaitable d'éviter la présence d'air (poches d'air, canaux d'air) au contact des câbles. A cette fin, on prévoit de combler les intervalles entre les câbles 6, par exemple en mettant en place des bandes de matériau isolant entre les câbles comme illustré par les bandes isolantes 11 à la figure 1 ; ou bien en déposant un isolant liquide ou pâteux sur la plaque frontale en noyant les câbles qui, après durcissement ou polymérisation du produit liquide ou pâteux, se trouvent enrobés dans une masse d'isolant, et l'on peut même envisager dans ce cas, comme illustré à la figure 3, que la même masse de matière isolante 19 constitue à la fois le panneau arrière et le remplissage entre les câbles 6 ; ou bien encore, et il s'agit là d'un mode de réalisation qui est actuellement préféré en raison de sa simplicité de mise en oeuvre, on constitue le panneau isolant arrière 12 avec une épaisseur notable et avec des gorges 20 comme illustré à la figure 4, ces gorges étant soit obtenues de fabrication (panneau moulé par exemple), soit usinées dans le panneau isolant : lors de l'assemblage (flèches 15) du panneau frontal 2 et du panneau arrière 12, les gorges 20 de celui-ci viennent coiffer étroitement les câbles 6 prémontés sur le panneau de plâtre 3.

Grâce à l'un ou l'autre des agencements précités, la chaleur rayonnée par chaque câble est préférentiellement dirigée vers la couche thermiquement conductrice (bande métallique 5) pour être ensuite plus favorablement répartie dans le panneau frontal 2 et de là rayonnée dans la pièce.

Pour que le panneau composite chauffant 1 conforme à l'invention puisse être monté, comme illustré à la figure 2, sur les rails de fixation 16 traditionnellement utilisés dans la construction pour le montage de panneaux rapportés, on prévoit que les câbles ne sont pas disposés au voisinage immédiat des bords du panneau et que le panneau isolant arrière 12, plus petit, laisse subsister une bande périphérique de largeur L1, comme montré à la figure 1, de saillie du panneau frontal 2.

Par ailleurs, il est prévu également que les câbles 6 soient disposés par groupes, tels que les deux groupes 9a et 9b illustrés à la figure 1, les groupes étant séparés les uns des autres par un intervalle libre 14 de largeur L2. Le panneau arrière 12 peut être scindé pour que chaque partie soit en correspondance avec les groupes 9a, 9b comme illustré à la figure 1. L'intervalle 14 permet d'appliquer le panneau 1 contre un rail de fixation 16 intermédiaire et de l'y fixer, comme illustré à la figure 2.

Au surplus, l'intervalle 14 peut servir à un découpage du panneau 1, par exemple pour une implantation dans une cloison où un panneau entier serait trop large ou pour un ajustement de la puissance thermique de la cloison ou du plafond. Pour faciliter le découpage du panneau 1, on peut prévoir un marquage destiné au guidage de l'outil de coupe.

Comme illustré à la figure 1, dans un tel agencement, chaque groupe ou arête autorégulante 9a, 9b de câbles 6 est muni de son propre fil de raccordement 10. Par contre, si le panneau 1 n'est équipé que d'un seul groupe de câbles, il est préférable de ne prévoir qu'un seul fil de raccordement 10 afin de simplifier la connexion sur le bornier.

De façon particulièrement préférée, le panneau composite de construction 1 conforme à l'invention comprend un panneau frontal 2 correspondant strictement aux caractéristiques des panneaux commerciaux constitués de carton 4 et de plâtre 3, et en particulier ayant les dimensions standards 1,20 m x 2,50 m avec une épaisseur de 13 mm. L'arête autorégulante 9 est formée de câbles 6 plats et relativement larges disposés en courtes longueurs de 2,20 m environ s'étendant longitudinalement avec un pas P déterminé de 10 cm environ, et appliqués étroitement contre un ruban mince 5 d'aluminium lui-même collé sur le support de plâtre 3 du panneau frontal 2. Les intervalles entre les câbles autorégulants 6 sont comblés par un isolant mince 11 d'épaisseur équivalente à celle des câbles autorégulants 6, c'est-à-dire de l'ordre de quatre millimètres. L'ensemble est ensuite recouvert du panneau isolant 12 ayant quelques millimètres d'épaisseur.

Le panneau 1 conforme à l'invention permet ainsi d'obtenir en une seule pose une surface rayonnante importante avec une répartition homogène du pas p des câbles 6 dont la puissance "nominale" est telle qu'un pas par exemple de 10 cm assure la mise en place soit de deux arêtes autorégulantes 9a, 9b comportant chacune cinq câbles 6, soit d'une seule arête autorégulante 9 comportant dix câbles 6.

On soulignera que la présence du panneau arrière isolant 12 n'exclut pas, lors du montage du panneau 1, le recours aux techniques classiques d'isolation thermique et/ou phonique, en particulier lorsque le panneau 1 est monté en tant que plafond. Ainsi à la figure 2 est illustrée une configuration de montage du panneau 1 conforme à l'invention en tant que panneau de plafond fixé aux poutres 16 de bordure et de milieu comme indiqué plus haut, avec l'adjonction, au-dessus du panneau arrière isolant 12, de plaques 17 thermiquement et/ou phoniquement isolante, par exemple en laine de verre ou laine de roche.

Conformément aux dispositions prévues pour constituer le panneau 1 de l'invention sur des bases structurelles et dimensionnelles empruntées aux panneaux standards composites, par exemple plâtre et carton (tel que "placoplâtre"), couramment utilisés dans le domaine de la construction, le panneau 1 de l'invention s'emploie de préférence en conjonction avec des panneaux standards au sein d'une même cloison ou d'un même plafond. Comme illustré à la figure 2, un (ou plusieurs) panneau 1 est disposé dans une situation prédéterminée au sein de la cloison ou du plafond en fonction des critères de chauffage par rayonnement requis pour le chauffage optimum du local ; en général cette situation est sensiblement centrale, de sorte qu'autour du (ou des) panneau 1 sont disposés des panneaux standards 18 qui ne présentent pas de caractéristiques chauffantes, mais auxquels sont associées des plaques d'isolation 17.

## Revendications

1. Panneau composite de construction du type intégrant des moyens de chauffage rayonnants,
**caractérisé en ce qu'**il comporte :
- au moins un panneau frontal (2),
- au moins un ensemble (9) de câbles électriques chauffants (6) de type autorégulant présentant un méplat longitudinal et de relativement courte longueur reliés entre eux par un conducteur électrique d'alimentation (7), ces câbles étant étroitement appliqués contre la face intérieure dudit panneau frontal (2) en s'étendant approximativement selon la longueur de celui-ci, et
- au moins un panneau arrière isolant (12).

2. Panneau de construction selon la revendication 1, **caractérisé en ce qu'**il comporte en outre une couche (5) d'une matière thermiquement bonne conductrice interposée entre chaque câble (6) et la face intérieure du panneau frontal (2).

3. Panneau de construction selon la revendication 2, **caractérisé en ce que** ce sont des bandes métalliques (5) en un métal thermiquement bon conducteur, notamment en aluminium, qui sont interposées entre les câbles respectifs (6) et la face intérieure du panneau frontal (2).

4. Panneau de construction selon l'une quelconque des revendications précédentes, **caractérisé en ce que** le panneau frontal (2) est, au moins partiellement, en plâtre.

5. Panneau de construction selon l'une quelconque des revendications précédentes, **caractérisé en ce que** le panneau frontal (2) est un panneau composite comprenant un panneau en plâtre (3) revêtu frontalement d'une plaque d'habillage (4) en carton ou analogue.

6. Panneau de construction selon l'une quelconque des revendications précédentes, **caractérisé en ce que** le panneau arrière (12) est constitué en un matériau électriquement, thermiquement et phoniquement isolant.

7. Panneau de construction selon l'une quelconque des revendications précédentes, **caractérisé en ce que** l'espace libre entre le panneau frontal (2) et le panneau arrière (12) et entre les câbles (6) est rempli d'un matériau électriquement, thermiquement et phoniquement isolant.

8. Panneau de construction selon la revendication 7, **caractérisé en ce que** le matériau isolant est mis en place sous forme de bandes (12).

9. Panneau de construction selon la revendication 7, **caractérisé en ce que** le matériau isolant est déposé sous forme liquide ou pâteuse sur le panneau frontal (2) pour former une masse isolante (19) enrobant les câbles (6) et tenant lieu de panneau arrière isolant.

10. Panneau de construction selon la revendication 7, **caractérisé en ce que** le panneau arrière (12) en matière isolante est creusé de gouttières (20) qui sont conformées en correspondance avec la forme externe des câbles autorégulants (6) et qui sont propres à recevoir lesdits câbles (6) lorsque le panneau arrière (12) est assemblé au panneau frontal (2).

11. Panneau de construction selon l'une quelconque des revendications précédentes, **caractérisé en ce que** les câbles (6) sont disposés approximativement parallèlement entre eux.

12. Panneau de construction selon l'une quelconque des revendications précédentes, **caractérisé en ce qu'**il possède une forme sensiblement rectangulaire avec des dimensions sensiblement égales à celles des panneaux standards de construction normalisés de manière à être interchangeable avec ceux-ci.

13. Panneau de construction selon l'une quelconque des revendications précédentes, **caractérisé en ce que** les câbles chauffants autorégulants (6) sont répartis en plusieurs groupes (9a, 9b) mutuellement parallèles et implantés à distance (L2) les uns des autres, de sorte que le panneau (1) peut être découpé, si besoin en est, en des emplacements prédéterminés en regard des intervalles (14) séparant les groupes de câbles.
